# EUROPEAN PATENT APPLICATION

(11) **EP 4 456 195 A1**
(43) Date of publication of application: **30.10.2024**
(21) Application number: 22909826.4
(22) Date of filing: 13.12.2022
(51) Int. Cl.: H01M 4/525, H01M 4/62, H01M 4/36, H01M 10/0525

(54) **POSITIVE ELECTRODE LITHIUM SUPPLEMENTING ADDITIVE, PREPARATION METHOD THEREFOR AND APPLICATION THEREOF**

(30) Priority: 24.12.2021 CN 202111608426
(71) Applicant: Shenzhen Innovazone Technology Co., Ltd., Shenzhen, Guangdong 518000 (CN)
(72) Inventor: ZHAO, Zhongke, Shenzhen, Guangdong 518000 (CN); WAN, Yuanxin, Shenzhen, Guangdong 518000 (CN); KONG, Lingyong, Shenzhen, Guangdong 518000 (CN)
(74) Representative: MERH-IP Matias Erny Reichl Hoffmann Patentanwälte PartG mbB
(86) International application number: PCT/CN2022/138795
(87) International publication number: WO 2023/116512

(57) **Abstract**

A cathode lithium-supplementing additive, a preparation method thereof, and an application thereof are provided. The cathode lithium-supplementing additive includes a core and a dense packaging layer coated on the core. The core includes a lithium-rich lithium-supplementing material, and a material of the dense packaging layer includes an inorganic aluminum compound. The cathode lithium-supplementing additive in the present application has high compactness due to the inclusion of the dense packaging layer, moreover, the deintercalation of lithium ions and the lithium ion conductivity are improved, and the residual alkali content is low, thus having excellent lithium-supplementing effect, lithium-supplementing stability, and processing performance. In addition, by using the preparation method for the cathode lithium-supplementing additive can ensure the prepared cathode lithium-supplementing additive have stable structure and electrochemical performance, high production efficiency, and saved production costs.

## Description

This application claims the priority of the Chinese patent application submitted to the CNIPA on Dec. 24, 2021, with an application number 202111608426.1 and titled "CATHODE LITHIUM-SUPPLEMENTING ADDITIVE AND PREPARATION METHOD AND APPLICATION THEREOF", the entire contents of which are incorporated by reference in this application.

### TECHNICAL FIELD

The present application relates to the field of secondary batteries, and more particularly to a cathode lithium-supplementing additive and preparation method and application thereof.

### BACKGROUND

During the first charging process of a lithium-ion battery, a surface of the anode is usually accompanied by the formation of a solid electrolyte (SEI) film. This process consumes a large amount of Li ⁺, which means that a part of Li ⁺ released from the cathode material is irreversibly consumed, and a reversible specific capacity of a corresponding cell reduces. The anode material, especially silicon-based anode material, will consume Li ⁺, resulting in loss of lithium in the cathode material and reducing the initial Coulombic efficiency and battery capacity of the battery. For example, in a lithium-ion battery system using a graphite anode, about 10% of the lithium source will be consumed for the initial charge. When the anode material with high specific capacity is used, such as an alloy (silicon, tin, etc.), an oxide (silicon oxide, tin oxide), and an amorphous carbon anode, the consumption of lithium source in the cathode will be aggravated.

In order to improve the low Coulombic efficiency problem caused by the irreversible loss of the anode, in addition to the pre-lithiation of the anode material and the electrode plate, lithium-supplementing on the cathode can also meet the requirements of high energy density. For example, the publicly reported lithium-rich iron-based material has a theoretical capacity as high as 867 mAh/g and a working voltage window consistent with that of conventional lithium-ion battery, and basically does not participate in the electrochemical process in the later stage, thus being a cathode lithium-supplementing additive with broad prospects. Another published cathode lithium-supplementing material Li₅FeO₄ is prepared by a sol-gel method, the use of such material as a cathode lithium-supplementing material of the lithium ion battery has the characteristics of large charge capacity and small discharge capacity. However, such material has harsh environmental adaptability and a large amount of the surface residual alkali, making it difficult to be processed. In another disclosed carbon-coated lithium ferrite material, the carbon coating is adopted to isolate the ambient environment, and the contact between lithium ferrite and water in the air is relieved, so as to improve the stability of the material; however, it is always difficult for the coating layer to be completely isolated from contacting with water in the air, resulting in material deterioration and failure. Moreover, after carbon coating, although the electron conductivity of the carbon-coated lithium ferrite material can be improved, the path of ion deintercalation is increased and the ion conductivity is affected, which affects the lithium-supplementing effect of the carbon-coated lithium ferrite material. Meanwhile, the carbon-coated lithium ferrite material still has residual alkali in the coating layer or at the interface between the coating layer and the lithium ferrite core, which results in difficulties in processing.

### TECHNICAL PROBLEMS

One of the purposes of embodiments of the present application is to provide a cathode lithium-supplementing additive and a preparation method thereof, so as to solve the technical problems of reduced ion conductivity or unsatisfactory processability of the existing cathode lithium-supplementing additive in a coating structure.

### TECHNICAL SOLUTIONS

In order to solve the above technical problems, the following technical solutions are adopted by embodiments of the present application:

In a first aspect, a cathode lithium-supplementing additive is provided. The cathode lithium-supplementing additive comprises a core and a dense packaging layer coated on the core. The core comprises a lithium-rich lithium-supplementing material, and a material of the dense packaging layer comprises an inorganic aluminum compound.

In a second aspect, a preparation method for a cathode lithium-supplementing additive is provided. The preparation method comprises the following steps:
forming a coating film layer on a surface of a lithium-rich lithium-supplementing material with a material containing an aluminum source, subjecting a resulting mixture to a first heat treatment in an oxygen-containing environment to form a dense packaging layer on a surface of the lithium-rich lithium-supplementing material;
or alternatively,
subjecting the lithium-rich lithium-supplementing material to a second heat treatment in an aluminum-containing container and in the oxygen-containing environment, to form the dense packaging layer on the surface of the lithium-rich lithium-supplementing material.

In a third aspect, a cathode material is provided. The cathode material comprises a cathode active material and the cathode lithium-supplementing additive as described in the above or the cathode lithium-supplementing additive prepared by the preparation method as described in the above.

In a fourth aspect, a cathode plate is provided. The cathode plate comprises a cathode current collector and a cathode active layer bonded to a surface of the cathode current collector. The cathode active layer contains the cathode lithium-supplementing additive as described in the above or the cathode lithium-supplementing additive prepared by the preparation method as described in the above.

In a fifth aspect, a secondary battery is provided. The secondary battery comprises a cathode plate and an anode plate, wherein the cathode plate is the cathode plate as described in the above.

Beneficial effects of the cathode lithium-supplementing additive provided in embodiments of the present application are summarized as follows: the dense packaging layer is coated on the core containing the lithium-rich material, such that the dense packaging layer is able to be effectively coated on the lithium-rich material contained in the core, thus isolating the core from the ambient environment, preventing, for example, water and carbon dioxide in the ambient environment from contacting with the core, ensuring the stability of the core and thereby ensuring the lithium-supplementing effect and the stability in lithium-supplementing of the cathode lithium-supplementing additive. On the one hand, the inorganic aluminum compound contained in the dense packaging layer enhances the compactness of the dense packaging layer and enhances the isolation effect of the core from the ambient environment; on the other hand, the inorganic aluminum compound contained in the dense packaging layer can also function as an ion conductivity additive, which improves the deintercalation of lithium ions and the lithium ion conductivity, thereby improving the lithium-supplementing effect of the cathode lithium-supplementing additive; and thirdly, the inorganic aluminum compound contained in the dense packaging layer can reduce residual alkali content in the core and the dense packaging layer, making the cathode lithium-supplementing additive of the present application have excellent processing properties. The core of the cathode lithium-supplementing additive of this application contains lithium-rich materials, which enables the cathode lithium-supplementing additive of this application to provide abundant lithium and to be used a "sacrifice agent" during the first cycle of charging, in which, all lithium ions can be released as much as possible at one time, so as to improve the initial Coulombic efficiency and the overall electrochemical performance of the battery.

Beneficial effects of the preparation method for the cathode lithium-supplementing additive provided in embodiments of the present application are summarized as follows: the cathode lithium-supplementing additive in a core-shell structure can be effectively prepared, and the dense packaging layer can contain an inorganic aluminum compound, which can effectively coat the lithium-rich material, meanwhile, the prepared cathode lithium-supplementing additive has a low residual alkali content, thereby ensuring that the prepared cathode lithium-supplementing additive has excellent lithium-supplementing effect, stable lithium-supplementing performance, and good processing performance. In addition, the preparation method for the cathode lithium-supplementing additive can ensure that the prepared cathode lithium-supplementing additive has stable structure and electrochemical performance, and high efficiency, and saves the production costs.

Beneficial effects of the cathode material and the cathode plate provided in embodiments of the present application are summarized as follows: due to the inclusion of the cathode lithium-supplementing additive of the present application, the components contained in the cathode active layer of the cathode plate of the present application are uniformly dispersed, and the quality of the film layer is high, making the cathode plate of the present application have excellent electrochemical performance. Moreover, in the process of charging and discharging, the contained cathode lithium-supplementing additive can be used as a lithium source in the first cycle of charging as a "sacrificing agent" to supplement the irreversible lithium ions consumed by the formation of the SEI film on the anode, thereby maintaining the abundance of lithium ions in the battery system, improving the initial Coulombic efficiency and the overall electrochemical performance of the battery.

Beneficial effects of the secondary battery provided in embodiments of the present application are summarized as follows: due to the electrode plate of the present application, the lithium ion battery of the present application has excellent initial Coulombic efficiency, battery capacity and cycle performance, long service life, and stable electrochemical performance.

### BRIEF DESCRIPTION OF THE DRAWINGS

In order to more clearly illustrate the specific embodiments of the present application, the following will briefly introduce the accompanying drawings that need to be used in the description of the specific embodiments or exemplary technology. Obviously, the accompanying drawings in the following drawings are some implementations of the present application, and those skilled in the art can obtain other drawings based on these drawings without creative work.
FIG. 1 is a schematic structural view of a cathode lithium-supplementing additive according to an embodiment of the present application;
FIG. 2 is a schematic structural view of a cathode lithium-supplementing additive according to an embodiment of the present application containing an ion conductor packaging layer;
FIG. 3 is a schematic structural view of the ion conductor packaging layer contained in the cathode lithium-supplementing additive according to an embodiment of the present application shown in FIG. 2, including a first ion conductor packaging layer;
FIG. 4 is a schematic structural view of the ion conductor packaging layer contained in the cathode lithium-supplementing additive according to an embodiment of the present application shown in FIG. 3, including a second ion conductor packaging layer;
FIG. 5 is a schematic structural view of the cathode lithium-supplementing additive according to an embodiment of the present application containing both an ion conductor packaging layer and an electron conductor packaging layer 22;
FIG. 6 is a scanning electron micrograph of a cathode lithium-supplementing additive provided in Example 1 of the present application;
FIG. 7 is an X-ray diffraction pattern of a cathode lithium-supplementing additive provided in Example 1 of the present application;
FIG. 8 is a transmission electron microscope image of a cathode lithium-supplementing additive provided in Example 1 of the present application; and
FIG. 9 is a graph of the initial charge specific capacity of a battery assembled by the cathode plate containing the cathode lithium-supplementing additive provided in Example 1.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

The terms "first" and "second" are only used for descriptive purposes to distinguish objects such as substances from each other, and cannot be understood as indicating or implying relative importance or implicitly specifying the quantity of indicated technical features. For example, without departing from the scope of the embodiments of the present application, the first XX can also be called the second XX, and similarly, the second XX can also be called the first XX. Thus, a feature defined as "first" and "second" may explicitly or implicitly include one or more of these features.

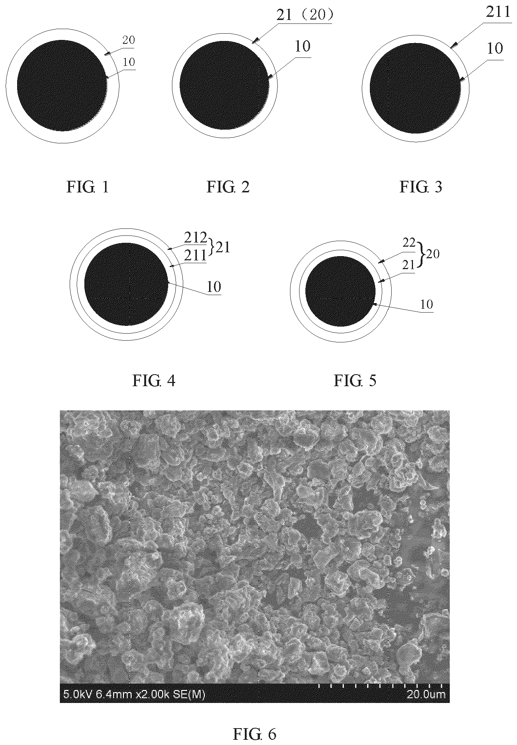

In a first aspect, embodiments of the present application provide a cathode lithium-supplementing additive. The cathode lithium-supplementing additive in an embodiment of the present application includes a core and a dense packaging layer coated on the core, that is, the cathode lithium-supplementing additive in the embodiment of the present application has a core-shell structure, as in the embodiment, the cathode lithium-supplementing additive in the embodiment of the application has a structure as shown in FIGS. 1-5, including a core 10 and a dense packaging layer 20 coated on the core 10.

The core 10 includes a lithium-rich lithium-supplementing material, that is, in the cathode lithium-supplementing additive of the embodiment of the present application, the core 10 is a lithium source for lithium-supplementing. Since the core 10 is rich in lithium, it is ensured that the cathode lithium-supplementing additive in the embodiment of the present application can provide abundant lithium, when being added as an additive to the electrode, the cathode lithium-supplementing additive can be used as a "sacrifice agent" during the first cycle of charging, in which, all the lithium ions contained in the cathode lithium-supplementing additive are released as much as possible to supplement the irreversible lithium ions consumed by the formation of the SEI film at the anode.

In addition, the lithium-rich lithium-supplementing material contained in the core 10 may be a conventional lithium-supplementing material, or a newly developed lithium-supplementing material. Based on the action of the cathode lithium-supplementing additive in embodiments of the present application, in this embodiment, the lithium-rich lithium-supplementing material is a lithium-supplementing material having an inverse fluorite structure. The lithium-supplementing material having the inverse fluorite structure thus makes the lithium-rich lithium-supplementing material have unidirectional capacity characteristics, which can effectively deintercalate lithium ions during the first charging process and will not cause lithium ions to be re-intercalated into the lithium-supplementing material during the discharge, thereby ensuring the lithium-supplementing effect of the lithium-supplementing additive.

The lithium-rich material contained in the core 10 may be a ternary lithium-supplementing material or a binary lithium-supplementing material. As in an embodiment, the lithium-rich lithium-supplementing material has a molecular formula of LₓM_{y}N_{z}O_{q}; in which, L represents Li or/and a mixed alkali metal element of Li and no more than 30% of at least one of K and Na; M comprises at least one of Fe, Co, Mn, Al, Ni, and Si; N comprises at least one of Fe, Co, Mn, Al, Ni, Si, and other metal elements having equivalent or different valence states; O is oxygen, x ranges from 4 to 6, y ranges from 0.7 to 1.0, z ranges from 0.01 to 0.3, and q ranges from 4 to 5. In some embodiments, n in the molecular formula, a molar ratio of L to a sum of M and N is (4 to 7): 1, which may specifically be 4:1, 5:1, 6:1, 7:1, or other typical but non-limiting molar ratio. In a specific embodiment, the lithium-rich lithium-supplementing material represented by LₓM_{y}N_{z}O_{q} is an aluminum-doped iron-based lithium-supplementing material, that is, M is Fe and N is Al. In such condition, the lithium-rich lithium-supplementing material represented by LₓM_{y}N_{z}O_{q} may be Li₅Fe_{0.98}Al_{0.02}O₄. These lithium-rich materials are rich in lithium, and can release lithium ions during the first cycle of charging to effectively supplement lithium. When the lithium-rich material has the inverse fluorite structure, the unidirectional capacity characteristics of the lithium-rich material can also be improved, thereby ensuring the lithium-supplementing effect of the lithium-supplementing additive of the present application. When lithium-rich materials are doped with aluminum elements, aluminum atoms exist in the form of replacing iron atomic lattice. Aluminum atoms in this form can widen the transmission channel of lithium ions and increase the deintercalation rate of lithium ions.

In an embodiment, the core 10 may be at least one of a primary particle and a secondary particle, specifically, the at least one of the primary particle and the secondary particle is formed by the lithium-rich material contained in the core 10. In an embodiment, a particle size of the core 10 may be 0.2 µm to 20 µm. For example, when the core 10 is the primary particle, the particle size of the primary particle, that is, a particle size distribution of the core 10, is 0.2 µm to 2 µm; and when the core 10 is the secondary particle, the particle size of the secondary particle, that is, the particle size distribution of the core 10, is 0.4 µm to 20 µm. The secondary particle refers to an agglomerated particle formed by aggregating more than one primary particle. By controlling the particle size and shape of the core 10, on the basis of being able to provide abundant lithium ions, the processability of the lithium-rich composite material in the preparation of lithium battery slurry is also improved. The core having relative small primary particle size may also de-intercalate more lithium ions.

In addition, although the lithium-rich material contained in the core 10 in the above embodiments is rich in lithium, the lithium-rich material is unstable when encountering water and carbon dioxide and easily reacts with water and carbon dioxide, thus resulting in reduced lithium-supplementing effect of the cathode lithium-supplementing additive in the embodiments of the present application. In addition, the lithium-rich material is generally rich in residual alkali formed in the processing, which further reduces the processing performance of the lithium-rich material, for example, a slurry containing the lithium-rich material may have sharply increased viscosity and may be quickly gelled and lose the fluidity, making the slurry unable to be subjected with subsequent processing. Therefore, on the basis of the core 10 in the above embodiments, the dense packaging layer 20 contained in the cathode lithium-supplementing additive in the above embodiments is coated on the core 10 to form a complete coating layer, as shown in FIG. 1. In this way, the dense packaging layer 20 can be effectively coated on the lithium-rich material contained in the core 10, making the core 10 isolated from the ambient environment, avoiding contact between the core 10 and the ambient environment, such as moisture and carbon dioxide, ensuring the stability of the core 10 and thereby ensuring the lithium-supplementing effect and the lithium-supplementing stability of the cathode lithium-supplementing additive.

The material of the dense packaging layer 20 includes an inorganic aluminum compound. In this way, the inorganic aluminum compound is added in the dense packaging layer 20, the presence of the inorganic aluminum compound enhances the compactness of the dense packaging layer 20 and the effect of isolating the core 10 from the ambient environment. Moreover, the inorganic aluminum compound can also function as an ion conductivity additive to improve the intercalation of lithium ions and the lithium ion conductivity, thereby improving the lithium-supplementing effect of the cathode lithium-supplementing additive. In addition, the presence of the inorganic aluminum compound also results in a low residual alkali content in the core 10 and the dense packaging layer 20, making the cathode lithium-supplementing additive of the embodiment of the present application have excellent processing performance.

The distribution of the inorganic aluminum compound added in the dense packaging layer 20 can be the following situations:

In an embodiment, the inorganic aluminum compound is distributed on an inner surface of the dense packaging layer 20 adjacent to the core 10.

In other embodiments, a content of the inorganic aluminum compound decreases gradually in a direction from the inner surface of the dense packaging layer adjacent to the core to an outer surface of the dense packaging layer.

By controlling the distribution of the inorganic aluminum compound in the dense packaging layer 20, the effect of the inorganic aluminum compound in the dense packaging layer 20 is enhanced, so that the compactness and the ion conductivity of the dense packaging layer 20 are improved and the residual alkali content of the dense packaging layer 20 is reduced, thereby improving the lithium-supplementing stability, lithium-supplementing effect, and processing performance of the cathode lithium-supplementing additive of the embodiments of the present application.

In an embodiment, the inorganic aluminum compound includes an inorganic aluminum compound generated by heat treatment. As in the embodiment, the inorganic aluminum compound includes at least one of Al₂O₃, LiAlO₂, and Li₅AlO₄. These inorganic aluminum compounds have high ion conductivity, and have a strong binding force with the lithium-rich lithium-supplementing material of the core 10, thereby enhancing the binding strength between the dense packaging layer 20 and the core 10. Meanwhile, such inorganic aluminum compound can form a dense film layer, which improves the compactness of the dense packaging layer 20, and improves the lithium-supplementing stability and lithium-supplementing effect of the cathode lithium-supplementing additive.

In an embodiment, when the inorganic aluminum compound includes Li₅AlO₄, Li₅AlO₄ can form the Li₅AlO₄ coating layer coated on the core 10, and can also be further doped into the core 10, for example, be diffused from the Li₅AlO₄ coating layer to the core 10, so as to form a transition layer containing Li₅AlO₄ in a surface layer of the core 10. It can be understood that the Li₅AlO₄ molecules can also be distributed in the core 10, for example, diffused into the core 10, thereby forming a transition layer containing Li₅AlO₄ in the surface layer of the core 10.

In an embodiment, when the inorganic aluminum compound includes Al₂O₃ and LiAlO₂, the Al₂O₃ and LiAlO₂ may form a mixed coating layer doped with each other, or may be a composite layer structure of a LiAlO₂ coating layer and an Al₂O₃ coating layer. It can be understood that the inorganic aluminum compound may also be any one of Al₂O₃ and LiAlO₂, and any one of them forms a corresponding coating layer.

In an embodiment, the inorganic aluminum compound comprises: Li₅AlO₄, LiAlO₂, and Al₂O₃ at the same time. Li₅AlO₄, LiAlO₂, and Al₂O₃ respectively form a Li₅AlO₄ coating layer, a LiAlO₂ coating layer, and an Al₂O₃ coating layer. In a direction from an inside of the core to a surface thereof, the Li₅AlO₄ coating layer, the LiAlO₂ coating layer, and the Al₂O₃ coating layer are sequentially coated to form an aluminum-containing transitional coating layer covering the core 10, that is, the Li₅AlO₄ coating layer is coated on the surface of the core 10, the LiAlO₂ coating layer is coated on an outer surface of the Li₅AlO₄ coating layer, and the Al₂O₃ coating layer is coated on the outer surface of the LiAlO₂ coating layer, in such condition, the dense packaging layer 20 comprises the aluminum-containing transitional coating layer. The core 10 may also be doped with Li₅AlO₄. As mentioned above, the Li₅AlO₄ coating layer may diffuse into the core 10 to form a transition layer containing Li₅AlO₄ in the surface layer of the core 10. The outer surface refers to a surface of coating layer facing away from the core 10. In the aluminum-containing transitional coating layer formed by the Li₅AlO₄ coating layer, the LiAlO₂ coating layer, and the Al₂O₃ coating layer, interfaces among the three layers can have a clear cross section, or transition layers can be formed by materials of every two adjacent layers at the interfaces thereof. Whether a transition layer is formed at the interface between two adjacent layers depends specifically on the method of forming the Li₅AlO₄ coating layer, the LiAlO₂ coating layer, and the Al₂O₃ coating layer. In the aluminum-containing transitional coating layer including the Li₅AlO₄ coating layer, the LiAlO₂ coating layer, and the Al₂O₃ coating layer, the Li₅AlO₄ coating layer is directly coated on the surface of the core 10, and the Li₅AlO₄ contained in the Li₅AlO₄ coating layer is rich in lithium and has a crystal form similar to the crystal form of the lithium-rich material contained in the core 10, thus in terms of crystal form, it can be considered that the aluminum atoms partially replace the metal atoms contained in the lithium-rich lithium-supplementing material in the core 10. Therefore, the Li₅AlO₄ coating layer can be effectively broaden the transmission channel of lithium ions and improve the ion conductivity of the Li₅AlO₄ coating layer. Moreover, the LiAlO₂ contained in the LiAlO₂ coating layer also has good ion conductivity characteristics, which can also be beneficial to the conduction of lithium ions, and the LiAlO₂ coating layer and the Al₂O₃ coating layer form a composite dense composite layer, which also has good compactness, and can effectively isolate the core 10 from unfavorable factors in the ambient environment, such as water vapor, carbon dioxide, etc., and can also effectively isolate the electrolyte from the direct contact with the core 10 and the Li₅AlO₄ coating layer, thereby effectively avoiding or reducing the negative reaction between the core 10 and the Li₅AlO₄ coating layer, thereby improving the electrochemical performance of the cathode lithium-supplementing additive of the present application, such as lithium-supplementing performance and lithium-supplementing effect.

Based on the distribution of the inorganic aluminum compound in the dense packaging layer 20, in an embodiment, as shown in FIG. 2, the dense packaging layer 20 includes an ion conductor packaging layer 21, and the ion conductor packaging layer 21 is coated on the surface of the core 10. The material of the ion conductor packaging layer 21 includes the inorganic aluminum compound. The conductor packaging layer 21 may be a coating layer formed of the inorganic aluminum-containing compound. Specifically, the Li₅AlO₄ coating layer, the LiAlO₂ coating layer, and the Al₂O₃ coating layer may be coated sequentially to form an aluminum-containing transitional coating layer.

In the above embodiments, a mass content of the inorganic aluminum compound contained in the dense packaging layer 20 can be controlled to be 0.1% to 5.0% in the dense packaging layer 20. By controlling and adjusting the content of the inorganic aluminum compound in the dense packaging layer 20, the effect of the inorganic aluminum compound as described in the above can be improved, the compactness of the dense packaging layer 20 can be improved, and the high ion conductivity and reduced residual alkali content can be ensured, thereby improving the lithium-supplementing stability, the lithium-supplementing effect, as well as the processability of the cathode lithium-supplementing additive.

Based on the structure of the cathode lithium-supplementing additive shown in FIG. 2, in an embodiment, as shown in FIG. 3, the ion conductor packaging layer 21 comprises a first ion conductor packaging layer 211, the first ion conductor packaging layer 211 is coated on the surface of the core and the first ion conductor packaging layer 211 is an inorganic aluminum compound. The inorganic aluminum compound is used to form the first ion conductor packaging layer 211 and to be coated onto the core 10, so that the first ion conductor packaging layer 211 has high density and high ion conductivity, effectively reducing the thickness of the compact packaging layer 20, thereby shortening the migration of lithium ions, improving the path of the lithium-supplementing stability and lithium-supplementing effect of the cathode lithium-supplementing additive, as well as effectively reducing the residual alkali content in the core 10 and the first ion conductor packaging layer 211, and improving the processing performance of the cathode lithium-supplementing additive in the embodiments of the present application.

In an embodiment, the thickness of the first ion conductor packaging layer 211 can be controlled to be 10 nm to 50 nm. The first ion conductor packaging layer 211 has a small thickness and can independently constitute the dense packaging layer 20.

Based on the structure of the cathode lithium-supplementing additive as shown in FIG. 2 and FIG. 3, as shown in FIG. 4, the ion conductor packaging layer 21 can further include a second ion conductor packaging layer 212, and the second ion conductor packaging layer 212 is coated on the surface of the first ion conductor packaging layer 211 away from the core 10, that is, the second ion conductor packaging layer 212 is coated on the first ion conductor packaging layer 211, and the second ion conductor packaging layer 212, together with the first ion conductor packaging layer 211, forms the ion conductor packaging layer 21 in a composite structure. The added second ion conductor packaging layer 212, together with the first ion conductor packaging layer 211, can form the ion conductor packaging layer structure in the composite structure, to enhance the ion conductivity and compactness of the ion conductor packaging layer 21, thereby enhancing the ion conductivity and the lithium-supplementing stability of the cathode lithium-supplementing additive, and being conducive to the outward transportation of lithium ions from the core. Meanwhile, after the core 10 is used as a "sacrifice agent" to release lithium ions, the ion conductor packaging layer 21 can also be used for secondary use and play an auxiliary role in enhancing the ion transmission inside the electrode. Based on the effect of the ion conductor packaging layer 21, when the functional encapsulation 20 only contains the ion conductor packaging layer 21, the ion conductor packaging layer 21 should have a compact structure and adopt a complete coating, in such condition, the first ion conductor packaging layers 211 and the second ion conductor packing layer 212 can adopt a partial coating or a complete coating, however, the ion conductor packaging layer in the composite structure formed by the first ion conductor packaging layers 211 and the second ion conductor packing layer 212 should adopt the complete coating and should be compact. In addition, a thickness of the second ion conductor packaging layer 212 can be adjusted according to actual needs, for example, according to the requirement that the ion conductor packaging layer in the composite structure formed by the first ion conductor packaging layers 211 and the second ion conductor packing layer 212 should adopt the compact coating, the thickness of the second ion conductor packaging layer 212 is controlled.

In an embodiment, the material of the second ion conductor packaging layer 212 may include at least one of a perovskite type, a NASICON type, and a garnet type. In a specific embodiment, the perovskite type includes Li₃ₓLa_{2/3-x}TiO₃ (LLTO), in particular, at least one of Li_{0.5}La_{0.5}TiO₃, Li_{0.33}La_{0.57}TiO₃, Li_{0.29}La_{0.57}TiO₃, Li_{0.33}Ba_{0.25}La_{0.39}TiO₃, (Li_{0.33}La_{0.56})_{1.005}Ti_{0.99}Al_{0.01}O₃, Li_{0.5}La_{0.5}Ti_{0.95}Zr_{0.05}O₃, etc.; the NASICON type includes but is not limited to Li_{1.4}Al_{0.4}Ti_{1.6}(PO₄)₃(LATP), the garnet type includes at least one of Li₇La₃Zr₂O₁₂ (LLZO), Li_{6.4}La₃Zr_{1.4}Ta_{0·6}O₁₂, and Li_{6.5}La₃Zr_{1.5}Ta_{0.5}O₁₂. By selecting the material of the second ion conductor packaging layer 212, the ion conductivity of the ion conductor packaging layer 21 can be improved. It can be understood that the thicknesses of the first ion conductor packaging layer 211 and the second ion conductor packaging layer 212 can also be adjusted to adjust the thickness of the ion conductor packaging layer 21 in order to optimize the compactness of the packaging layer 20 and adjust the ion transmission path.

In some embodiments, on the basis of FIGS. 2-4, the dense packaging layer 20 further includes an electron conductor packaging layer 22. As shown in FIG. 5, the electron conductor packaging layer 22 is coated on a surface of the ion conductor packaging layer 21 away from the core 10, that is, the electron conductor packaging layer 22 is coated on the ion conductor packaging layer 21. The addition of the above electron conductor packaging layer 22 into the dense packaging layer 20 can enhance the electron conductivity of the dense packaging layer 20, thereby enhancing the electron conductivity of the cathode lithium-supplementing additive and being conducive to reducing the internal impedance of the electrode; meanwhile, during and after the releasing process of the core 10 as the "sacrifice agent", the electron conductor packaging layer 22 can also be reused, playing the auxiliary role of a conductive agent inside the electrode. Moreover, the electron conductor packaging layer 22 can also play a synergistic effect on the compactness of the ion conductor packaging layer 21, and improve the compactness of the dense packaging layer 20, thereby improving the lithium-supplementing stability and lithium-supplementing effect of the cathode lithium-supplementing additive. Based on the function of the electron conductor packaging layer 22, the electron conductor packaging layer 22 may adopt the complete coating or the partial coating.

In an embodiment, the electron conductor packaging layer 22 has a thickness of 50 nm to 200 nm. In other embodiments, the material of the electron conductor packaging layer 22 includes at least one of a carbon material, a conductive oxide, and a conductive organic substance. In a specific embodiment, when the material of the electron conductor packaging layer 22 is a carbon material, the carbon material includes at least one of an amorphous carbon, a carbon nanotube, a graphite, a carbon black, a graphene, etc. For example, when the material of the electron conductor packaging layer 22 is a carbon material, and the content of the carbon material in the cathode lithium-supplementing additive ranges from 2 wt. % to 10 wt. %, which can specifically be 2 wt. %, 3 wt. %, 4 wt. %, 5 wt. %, 6 wt. %, 7 wt. %, 8 wt. %, 9 wt. %, 10 wt. % and other typical but non-limiting contents. In other specific embodiments, when the material of the electron conductor packaging layer 22 is a conductive oxide, the conductive oxide may include at least one of In₂O₃, ZnO, and SnO₂. The conductive organic substance may be a conductive polymer, etc. By adjusting the content and material of the electron conductor packaging layer 22, the electron conductivity can be improved. For example, it is tested that under the condition that the electron conductor packaging layer 22 exists, the cathode lithium-supplementing additive has a resistivity of less than 5Ω·cm at 25°C.

In addition, due to the high compactness and high surface quality of the cathode lithium-supplementing additive in the above embodiments, the specific surface area of the cathode lithium-supplementing additive is measured to be 0.2 m²/g to 5.0 m²/g. A bulk density of the cathode lithium-supplementing additive is 0.35 g/mL to 0.80 g/mL, and may be 0.50 g/mL to 0.80 g/mL. A tap density of the cathode lithium-supplementing additive is 0.50 g/mL to 1.20 g/mL, and may be 0.80 g/mL to 0.80 g/mL.

Based on the structure and performance of the lithium-supplementing additive in the above embodiments of the present application, the above lithium-supplementing additive in the present application has a dense packaging layer 20 containing an inorganic aluminum compound, thus having excellent storage properties, processability, and stable electrochemical performance. For example, it is tested that when the cathode plate is directly prepared by the lithium-supplementing additive in the embodiment of the present application, for example, a capacity of the cathode plate prepared by the cathode lithium-supplementing additive, the binder and the conductive agent stored for 20 hrs at an ambient humidity of 25% has a decay rate of no more than 30%, optionally no more than 14%, relative to a capacity stored for 0.5 hrs; and the binder and the conductive agent stored for 20 hrs at an ambient humidity of 10% has a decay rate of no more than 20%, optionally no more than 2.4%, relative to a capacity stored for 0.5 hrs. This shows that the lithium-supplementing additive of the embodiments of the present application has excellent storage properties, high lithium-supplementing effect, and lithium-supplementing stability. Ideally, the lithium-supplementing additive of the present application is stored in a dry, oxygen-free favorable environment, such as a vacuum environment, so as to maximize the electrochemical performance of the lithium-supplementing additive.

In a second aspect, embodiments of the present application further provide a preparation method of the above cathode lithium-supplementing additive. In an embodiment, the preparation method of the cathode lithium-supplementing additive in the embodiments of the present application includes the following steps:
S01: forming a coating film layer on a surface of a lithium-rich lithium-supplementing material with a material containing an aluminum source; and
S02: subjecting the lithium-rich lithium-supplementing material with the coating film layer formed in step S01 to a first heat treatment in an oxygen-containing environment to form a dense packaging layer on a surface of the lithium-rich lithium-supplementing material.

The lithium-rich lithium-supplementing material in step S01 is the lithium-rich lithium-supplementing material forming the core 10 of the above cathode lithium-supplementing additive, and the dense packaging layer is also the dense packaging layer 20 in the above cathode lithium-supplementing additive. Then the coating film layer is the precursor layer of the dense packaging layer. Therefore, the materials, structures, and thicknesses of the lithium-rich lithium-supplementing material and the dense packaging layer in step S01 are the materials, structures, and thicknesses of the core 10 and the dense packaging layer 20 of the above cathode lithium-enrichment additive. In order to save the space of the application text, details of the lithium-rich lithium-supplementing material and the dense packaging layer in step S01 are not repeated herein.

In addition, the lithium-rich lithium-supplementing material can be prepared according to the preparation method of each lithium-rich lithium-supplementing material.

In an embodiment, the method of forming the coating film layer on the surface of the lithium-rich lithium-supplementing material with the material containing the aluminum source in step S01 comprises the following steps:
preparing a solution from the aluminum source, dispersing the lithium-rich lithium-supplementing material in the solution, and triggering an aluminum precipitation reaction to deposit an aluminum compound on the surface of the lithium-rich lithium-supplementing material, whereby forming a coating film layer containing the aluminum compound.

A coating film layer is formed in situ on the surface of the lithium-rich lithium-supplementing material by a solution in-situ deposition method to improve the integrity and compactness of the coating film layer. The aluminum source may then be a precursor material for forming the coating film layer. As in an embodiment, the aluminum source may include at least one of aluminum isopropoxide, an aluminum salt of an organic acid radical, aluminum oxide, aluminum nitrate, aluminum chloride, aluminum sulfate, and aluminum silicate. The aluminum salt of an organic acid radical may include at least one of aluminum acetate, aluminum citrate, and aluminum isopropoxide. When the aluminum source is these inorganic aluminum oxides, the particle size may be in the nanometer range. These aluminum sources can effectively decompose or react to form aluminum-containing precipitates, which are in-situ combined on the surface of the lithium-rich lithium-supplementing material. Meanwhile, the solvent of the solution should ensure the stability of the lithium-rich lithium-supplementing material, and the solvent type can be selected according to the solubility of the aluminum source. In addition, the content or thickness of the coating layer can be controlled by controlling the mixing ratio of the aluminum source to the lithium-rich lithium-supplementing material.

In a specific embodiment, the solvent of the solution may be but not limited to tetrahydrofuran. Then, in such condition, the method of forming the coating film layer on the surface of the lithium-rich lithium-supplementing material with the material containing the aluminum source in step S01 is carried out by the following steps:
After aluminum isopropoxide in tetrahydrofuran is mixed with lithium-rich lithium-supplementing materials, a thermal decomposition reaction is carried out, and aluminum oxide precipitates are deposited on the surface of lithium-rich lithium-supplementing materials to form an aluminum oxide coating film layer containing the aluminum compound.

It can be understood that, in step S01, in addition to using the above solution precipitation method to form a coating film layer on the surface of the lithium-rich lithium-supplementing material with the material containing the aluminum source, other methods can also be used to form a coating film layer on the surface of the lithium-rich lithium-supplementing material.

In step S02, during the first heat treatment process of the composite material containing the coating layer in step S01, the coating film layer is subjected to the first heat treatment under the action of heat to form a dense coating layer, and meanwhile, under the conditions of heat treatment, the aluminum element in the coating film layer can or may also react with the surface of the lithium-rich lithium-supplementing material to generate the aluminum-containing compound, such as LiAlO₂, Li₅AlO₄, etc., by reacting with lithium, thus forming the dense packaging layer. Therefore, in an embodiment, the first heat treatment may be sintering treatment, for example, the temperature may be 700°C to 1000°C, specifically 700°C, 800°C, 900°C, 1000°C and other typical but non-limiting temperatures. The time of the first heat treatment should ensure that the aluminum source fully reacts to form the target inorganic aluminum compound, for example, it may be 20 hrs to 48 hrs. By controlling and optimizing the conditions of the first heat treatment, the coating film layer can be fully heat treated, the compactness of the dense packaging layer can be improved, and the residual alkali content of the prepared cathode lithium-supplementing additive can be reduced. In addition, by controlling the time of the first heat treatment, the type of the inorganic aluminum compound in the dense packaging layer can be controlled or the structure of the dense packaging layer forming the inorganic aluminum compound can be indirectly controlled. For example, the time of the heat treatment, such as the sintering treatment, is controlled, so that while the aluminum source generates inorganic aluminum, the inorganic aluminum coated on the surface of the core reacts with the lithium-rich lithium-supplementing material contained in the core, specifically, the aluminum atoms partially replace the metal ions contained in the lithium-rich lithium-supplementing material, thereby generating a Li₅AlO₄ coating layer, a LiAlO₂ coating layer on the surface of the Li₅AlO₄ coating layer, and a Al₂O₃ coating layer on the surface of the LiAlO₂ coating layer, thereby forming the Li₅AlO₄ coating layer, the LiAlO₂ coating layer, and the Al₂O₃ coating layer that are coated sequentially to form an aluminum-containing transitional coating layer. It should be understood that the time of the first heat treatment can also be controlled, so that the thickness of the Li₅AlO₄ coating layer increases toward the direction away from the core, while the thicknesses of the LiAlO₂ coating layer and the Al₂O₃ coating layer correspondingly decrease, or all the reaction produces the Li₅AlO₄ coating layer.

In addition, embodiments of the present application also provide another preparation method of the above cathode lithium-supplementing additive. In an embodiment, the preparation method of the cathode lithium-supplementing additive in the embodiment of the present application includes the following steps:
S03: subjecting the lithium-rich lithium-supplementing material to a second heat treatment in an aluminum-containing container and in the oxygen-containing environment, to form the dense packaging layer on the surface of the lithium-rich lithium-supplementing material.

The lithium-rich lithium-supplementing material in step S03 is the same as the lithium-rich lithium-supplementing material in the above step S01. In the second heat treatment process, the aluminum in the aluminum-containing container will react with the oxygen in the environment to form a deposited inorganic aluminum compound on the surface of the lithium-rich lithium-supplementing material to form a dense packaging layer. Therefore, the effect of the second heat treatment is the same as that of the first heat treatment. As in the embodiment, the second heat treatment can also be sintering treatment, for example, the temperature can be 500°C to 1000°C, specifically 500°C, 600°C, 700°C, 800°C, 900°C, 1000°C, and other typical but non-limiting temperatures. The time of the second heat treatment should ensure that the aluminum source fully reacts to form the target inorganic aluminum compound, for example, it may be 20 hrs to 48 hrs. Then in the second heat treatment process, it is also possible to control the heat treatment such as the temperature and time of sintering to realize the change of the type of inorganic aluminum generated by the second heat treatment and the structure of the inorganic aluminum-containing layer, just like the types including Li₅AlO₄, LiAlO₂, and Al₂O₃, or the structure of the aluminum-containing transitional coating layer formed by sequentially coating the Li₅AlO₄ coating layer, the LiAlO₂ coating layer, and the Al₂O₃ coating layer.

In some embodiments, after the above step S02 or step S03, the preparation method further includes coating other functional layers on the surface of the dense packaging layer, such as forming the second ion conductor packaging layer 212 contained in the above cathode lithium-supplementing additive or coating the electron conductor packaging layer 22 contained in the above cathode lithium-supplementing additive. Specifically, the method of forming other functional layers, such as the second ion conductor packaging layer 212 and/or the electron conductor packaging layer 22, on the surface of the packaging layer can be formed by selecting a corresponding or suitable method according to the structure and material of the film layer.

Therefore, the preparation method of the above cathode lithium-supplementing additive can effectively prepare the cathode lithium-supplementing additive of the above embodiments of the present application in the core-shell structure, and can ensure that the dense packaging layer contains inorganic aluminum compound, and meanwhile make the prepared cathode lithium-supplementing additive have a low residual alkali content, thus ensuring that the prepared cathode lithium-supplementing additive has excellent lithium-supplementing effect, stable lithium-supplementing performance, and good processing performance. In addition, the preparation method of the cathode lithium-supplementing additive can ensure that the prepared cathode lithium-supplementing additive has stable structure and electrochemical performance, high efficiency, and saves production costs.

In a third aspect, embodiments of the present application further provide a cathode material. The cathode material in the embodiments of the present application includes the cathode active material and the cathode lithium-supplementing additive in the above embodiments of the application. In this way, the cathode material of the embodiments of the present application has excellent lithium-supplementing performance and good processability, and can improve the quality of the cathode active material layer, thereby improving the quality of the cathode active material layer, and making the corresponding cathode plate has the electrochemical performance.

In an embodiment, the content of the cathode lithium-supplementing additive in the cathode material of the embodiment of the application above can control the mass content of the cathode material in the cathode active layer of the embodiments of the application to be 1.5% to 5.5%, optionally 2.0 %.

In other embodiments, the cathode active material contained in the cathode material of the embodiments of the present application can be a phosphate cathode active material and a ternary cathode active material, which, in a specific embodiment, comprises one or more of lithium cobaltate, lithium manganate, lithium iron phosphate, lithium manganese iron phosphate, lithium vanadium phosphate, lithium vanadium oxyphosphate, lithium fluorovanadium phosphate, lithium titanate, lithium nickel cobalt manganate, and lithium nickel cobalt aluminate.

In a fourth aspect, embodiments of the present application further provide a cathode plate. The cathode plate of the embodiments of the present application includes a cathode current collector and a cathode active layer bonded to a surface of the cathode current collector. The cathode active layer contains the cathode lithium-supplementing additive of the above embodiments of the present application. Since the cathode plate of the embodiments of the present application contains the cathode lithium-supplementing additive of the above embodiments of the present application, during the process of charging and discharging, the cathode lithium-supplementing additive contained in the cathode plate plays the above role and can be used as a lithium source in the first cycle of charging and firstly consumed as a "sacrifice agent" to supplement the irreversible lithium ions consumed by the formation of the SEI film on the anode, so as to maintain the abundance of lithium ions in the battery system and improve the initial Coulombic efficiency and overall electrochemical performance of the battery. Moreover, the quality of the cathode plate is stable and the yield rate is high.

In an embodiment, the mass content of the cathode lithium-supplementing additive contained in the cathode active layer of the above embodiments of the present application may be 1.5% to 5.5%, optionally 2.0%. In addition to the cathode lithium-supplementing additive, the cathode active layer further includes a cathode active material, a binder, and a conductive agent. The binder can be commonly used electrode binder, including, for example, one or more of a polyvinylidene chloride, a soluble polytetrafluoroethylene vinyl fluoride, a styrene-butadiene rubber, a hydroxypropyl methylcellulose, a carboxymethylcellulose, a polyvinyl alcohol, an acrylonitrile copolymer, a sodium alginate, a chitosan, and a chitosan derivative. In an embodiment of the present application, the conductive agent may be a commonly used conductive agent, including, for example, one or more of a graphite, a carbon black, an acetylene black, a graphene, a carbon fiber, C60, and a carbon nanotube. The cathode active material may include one or more of lithium cobaltate, lithium manganate, lithium iron phosphate, lithium vanadium phosphate, lithium vanadium oxyphosphate, lithium fluorovanadium phosphate, lithium titanate, lithium nickel cobalt manganate, and lithium nickel cobalt aluminate.

In an embodiment, the preparation process of the cathode plate can be as follows: the cathode active material, the cathode lithium-supplementing additive, the conductive agent, and the binder are mixed to obtain the electrode slurry, and the cathode slurry is coated on the cathode current collector, followed with drying, rolling, die-cutting and other steps to prepare the cathode plate.

In a fifth aspect, embodiments of the present application further provide a secondary battery. The secondary battery of the embodiments of the present application includes necessary components, such as a cathode plate, an anode plate, a separator, and an electrolyte, as well as other necessary or auxiliary components. The cathode plate is the cathode plate of the above embodiments of the present application, that is, the cathode active layer contained in the cathode plate contains the cathode lithium-supplementing additive of the above embodiments of the present application.

Since the secondary battery of the embodiments of the present application contains the cathode lithium-supplementing additive of the above embodiments of the present application, based on the excellent lithium-supplementing performance of the cathode lithium-supplementing additive of the above embodiments of the present application or has ion conductivity and/or electron conductivity, the secondary battery of embodiments of the present application has excellent initial Coulombic efficiency, battery capacity, and cycle performance, long service life and stable electrochemical performance.

A number of specific examples are used below to illustrate the cathode lithium-supplementing additive, the preparation method thereof and the application thereof according to embodiments of the present application.
1. Examples of cathode lithium-supplementing additive and preparation method thereof:

### Example 1

This example provides a cathode lithium-supplementing additive and a preparation method thereof. The cathode lithium-supplementing additive includes a Li₅FeO₄ core, an alumina-containing hydrophobic layer coated on the core, and a carbon layer coated on an outer surface of the alumina-containing hydrophobic layer, that is, the alumina-containing hydrophobic layer and the carbon layer form a composite dense packaging layer.

The preparation method of the cathode lithium-supplementing additive in this example was prepared by the following steps:
S1.Synthesis method of Li₅FeO₄ material:
Iron oxide and lithium carbonate were used as the iron source and lithium source to synthesize Li₅FeO₄. The raw materials were ball milled and mixed according to a molar ratio of Fe to Li being 1:7. After the mixing, sintering was carried out according to the following sintering procedure: 1. the temperature was increased from the room temperature to 900°C at a heating rate of 5 K/min; 2. the temperature was then kept at 850°C for 24 hrs; 3. the temperature was decreased to the room temperature; and argon was introduced for protection during the whole sintering process, and an obtained material was the Li₅FeO₄ material;
S2. Preparation method of inorganic aluminum-containing dense hydrophobic layer:
   Li₅FeO₄ powder and aluminum isopropoxide at a mass ratio of 0.98:0.02 were uniformly dispersed in a tetrahydrofuran solution, and reacted in a high-temperature oven at 200°C for 20 hrs. After the reaction vessel was cooled to the room temperature, a reaction liner was taken out to filter a hydrothermal reaction product, which was then kept and sintered at 1000°C for 20 hrs in an oxygen atmosphere, and an inorganic aluminum-containing dense hydrophobic layer was coated on the surface of the Li₅FeO₄ material in situ; in which, the inorganic aluminum-containing dense hydrophobic layer was an aluminum-containing transitional coating layer formed by sequentially coating a Li₅AlO₄ coating layer, a LiAlO₂ coating layer, and a Al₂O₃ coating layer, and the Li₅AlO₄ coating layer was coated on Li₅FeO₄;
   S3. Carbon coating formed on the surface of inorganic aluminum-containing dense hydrophobic layer:
      The above material was transferred to a mixer, PEO was added at a mass ratio of 3% to 10% of the composite material of the inorganic aluminum-containing dense hydrophobic layer in step S2, uniformly dispersed, and then kept at a temperature of 500°C for 24 hrs under an argon or nitrogen atmosphere, and then PEO was cracked under high temperature conditions to generate carbon, which was uniformly coated on the surface of the composite material of the inorganic aluminum-containing dense hydrophobic layer in step S2 to form a dense conductive carbon coating layer, and finally to obtain the final product C@ inorganic aluminum@Li₅FeO₄( or recorded as: C-Li₅Fe_{0.98}Al_{0.02}O₄, in which, @ means coating).

It was measured that the average particle size of the core Li₅FeO₄ was 5 µm, the thickness of the inorganic aluminum-containing dense hydrophobic layer was 20 nm, the thickness of the carbon coating layer was 80 nm, the specific surface area was 0.82 m²/g, and the measured resistivity was smaller than 5Ω·cm at 25°C.

The intensity ratio characteristics of the 2theta standard peak position of the XRD of C@Al₂O₃@Li₅FeO₄ in this example are as listed in Table 1 below: (referring to XRD pattern):

**Table 1**

| Intensity ratio of the 2theta standard peak position of XRD | Ranges |
|---|---|
| 16.62°/23.58° | 0.23-0.42 |
| 21.55°/23.58° | 0.76-0.96 |
| 33.80°/23.58° | 0.89-1.24 |
| 36.65°/23.58° | 0.33-0.43 |
| 43.70°/23.58° | 0.37-0.39 |
| 46.18°/23.58° | 0.38-0.42 |
| 56.55°/23.58° | 0.37-0.39 |

### Example 2

This example provides a cathode lithium-supplementing additive and a preparation method thereof. This example provides a cathode lithium-supplementing additive and a preparation method thereof. The cathode lithium-supplementing additive includes a Li₅FeO₄ core, an inorganic aluminum-containing hydrophobic layer coated on the core, and a carbon layer coated on an outer surface of the inorganic aluminum-containing hydrophobic layer, that is, the inorganic aluminum-containing hydrophobic layer and the carbon layer form a composite dense packaging layer.

The preparation method of the cathode lithium-supplementing additive in this example was prepared by the following steps:
S1.Synthesis method of Li₅FeO₄ material:
Iron ferric oxide and lithium carbonate were ball milled and mixed according to a molar ratio of Fe:Li being 1:6, agate beads were selected as ball milling beads, and agate jars were selected as ball milling jars, the ball milling speed was selected to be 50 HZ, and the ball milling time was selected to be 24 hrs. The material after mixing was transferred into a tube furnace for sintering according to the following sintering procedure: the temperature was increased at a rate of 10°C/min to 1000°C, the temperature was then kept at 1000°C in an inert atmosphere such as nitrogen or argon for 48 hrs. After the reaction, a high-purity Li₅FeO₄ material was obtained.

S2. Synthesis method of inorganic aluminum-containing dense hydrophobic layer:
99.00 g of the synthesized Li₅FeO₄ material and 1.00 g of a nano-alumina material were placed into a beaker, added with 500 mL of absolute ethanol, and stirred in a magnetic stirrer. The stirring time was 24 hrs, and the stirring speed was selected to be 600 rpm. After the stirring, suction filtration was carried out, and a filter residue obtained by the suction filtration was kept at a temperature of 1000°C for 48 hrs in an oxygen atmosphere, after the reaction, a high-purity inorganic aluminum-containing hydrophobic layer coated on the Li₅FeO₄ material was obtained; in which, the inorganic aluminum-containing dense hydrophobic layer was an aluminum-containing transitional coating layer formed by sequentially coating a Li₅AlO₄ coating layer, a LiAlO₂ coating layer, and a Al₂O₃ coating layer, and the Li₅AlO₄ coating layer was coated on Li₅FeO₄;
S3. Carbon coating formed on the surface of inorganic aluminum-containing dense hydrophobic layer:
   The above material was transferred to a mixer, PVDF was added at a mass ratio of 3% to 10% of the composite material of the inorganic aluminum-containing dense hydrophobic layer in step S2, uniformly dispersed, and then kept at a temperature of 500°C for 24 hrs under an argon atmosphere, and then PVDF was cracked under high temperature conditions to generate carbon, which was uniformly coated on the surface of the composite material of the inorganic aluminum-containing dense hydrophobic layer to form a dense conductive carbon coating layer, and finally to obtain the final product C@ inorganic aluminum@Li₅FeO₄.

### Example 3

This example provides a cathode lithium-supplementing additive and a preparation method thereof. This example provides a cathode lithium-supplementing additive and a preparation method thereof. The cathode lithium-supplementing additive includes a Li₅FeO₄ core, an inorganic aluminum-containing hydrophobic layer coated on the core, and a carbon layer coated on an outer surface of the inorganic aluminum-containing hydrophobic layer, that is, the inorganic aluminum-containing hydrophobic layer and the carbon layer form a composite dense packaging layer.

The preparation method of the cathode lithium-supplementing additive in this example was prepared by the following steps:
S1. Synthesis method of Li₅FeO₄ material:
Ferric nitrate, lithium carbonate, and lithium hydroxide were added into an aqueous solution at a molar ratio of 1:3:3 for mixing, and stirred at 600 rpm for 24 hrs; after the mixing, water was evaporated, and a solid phase powder was finally collected. The powder was put into a tube furnace for sintering according to the following sintering procedure: the temperature was increased at a rate of 10°C/min to 1000°C, the temperature was then kept at 1000°C in an inert atmosphere such as nitrogen or argon for 20 hrs. After the reaction, a high-purity Li₅FeO₄ material was obtained;
S2. Synthesis method of inorganic aluminum-containing dense hydrophobic layer:
   95.00 g of the synthesized Li₅FeO₄ material and 10 g of an aluminum citrate material were placed into a beaker, added with 500 mL of absolute ethanol, and stirred in a magnetic stirrer. The stirring time is 36 hrs, the temperature was kept at 50°C during the stirring, and the stirring speed was selected to be 600 rpm. After the stirring, suction filtration was performed, and a filter residue obtained by suction filtration was kept at 1000°C for 24 hrs in an oxygen atmosphere, and after the reaction, a high-purity inorganic aluminum-containing hydrophobic layer coated on the Li₅FeO₄ material was obtained; in which, the inorganic aluminum-containing dense hydrophobic layer was an aluminum-containing transitional coating layer formed by sequentially coating a Li₅AlO₄ coating layer, a LiAlO₂ coating layer, and a Al₂O₃ coating layer, and the Li₅AlO₄ coating layer is coated on Li₅FeO₄;
   S3. Carbon coating formed on the surface of inorganic aluminum-containing dense hydrophobic layer:
      The above material was transferred to a mixer, added with oligolayer graphene accounting for 3%-10% of a mass of the inorganic aluminum-containing dense hydrophobic layer composite material in step S2, and performed with ball milling and mixing, the ball milling speed was adjusted to 50 Hz, and the ball milling time was set to 48 hrs. After the ball milling, the material was taken out and kept at a temperature of 1000°C for 30 hrs under an argon atmosphere. Under high temperature conditions, graphene was uniformly coated on the surface of the composite material of the inorganic aluminum-containing dense hydrophobic layer, forming a dense conductive carbon coating layer.

### Comparative example 1

This comparative example provides a cathode lithium-supplementing additive and a preparation method thereof. Compared with Example 2, the cathode lithium-supplementing additive in this comparative example does not contain the inorganic aluminum-containing dense hydrophobic layer and a carbon layer in situ on the surface of the core of the Li₅FeO₄ material.

### Comparative example 2

This comparative example provides a cathode lithium-supplementing additive and a preparation method thereof. Compared with Example 2, the cathode lithium-supplementing additive of this comparative example does not contain the inorganic aluminum-containing dense hydrophobic layer in situ on the surface of the core of the Li₅FeO₄ material, but retains the carbon coating layer, that is, the cathode lithium-supplementing additive of this comparative example is C@Li₅FeO₄.

### S1. Synthesis of Li₅FeO₄:

Iron oxide and lithium carbonate were ball milled and mixed according to a molar ratio of Fe:Li being 1:6, agate beads were selected as ball milling beads, and agate jars were selected as ball milling jars, the ball milling speed was selected to be 50HZ, and the ball milling time was selected to be 24 hrs. The material after mixing was transferred into a tube furnace for sintering according to the following sintering procedure: the temperature was increased at a rate of 10°C/min to 1000°C, the temperature was then kept at 1000°C in an inert atmosphere such as nitrogen or argon for 48 hrs. After the reaction, a high-purity Li₅FeO₄ material was obtained.

S3. Carbon coating formed on the surface of Li₅FeO₄:
The Li₅FeO₄ material was mixed with PEO with a mass ratio of 3% to 10%, uniformly dispersed, and then kept at the temperature of 1000° C for 48 hrs under an argon atmosphere. Under high temperature conditions, PEO was cracked and uniformly coated on the surface of Li₅FeO₄ material, forming a dense conductive carbon coating layer.

### 2. Examples of Lithium-ion battery:

The cathode lithium-supplementing additives provided by the above Examples 1-3 and the cathode lithium-supplementing additives provided by the comparative examples were assembled into cathodes and lithium-ion batteries according to the following methods:
Cathode: under the same conditions, an NMP, a Super P-Li, a PVDF, and a cathode lithium-supplementing additive were mixed according to a ratio of NMP: Super P-Li: PVDF: cathode lithium-supplementing additive being 25:8:1:1, the mixing method was ball milling, and the ball milling time was 60 mins; the rotation speed was set at 30 HZ; through the homogenization-coating-drying-cutting operation, the cathode plate was prepared, and the cathode plate was baked in a vacuum oven at 100°C to remove traces of water; in which, the cathode lithium-supplementing additives were the cathode lithium-supplementing additives provided by the above Examples 1-3 and the cathode lithium-supplementing additives provided by the comparative examples, and the storage conditions were the same;
In addition, the prepared cathode containing the cathode lithium-supplementing additive provided in Example 1 was stored at a relative humidity of 25% (at 25°C) for 0.5 hr, 1 hr, 2 hrs, 5 hrs, 10 hrs, and 20 hrs;
Anode: a lithium metal plate was a lithium metal plate with a diameter of 16 mm produced by Tianjin Zhongneng Lithium Industry;
Electrolyte: the electrolyte was a 1 mol/L LiPF6 solution, and the solvent was composed of ethylene carbonate (EC) and diethyl carbonate (DEC) in a volume ratio of 1:1;
Separator: a PE separator produced by Shanghai Enjie Ltd.;
Battery casing: (including an anode casing, a stainless steel gasket, and a cathode casing) the model was CR2032;
Lithium-ion battery assembly: a button lithium-ion battery was assembled according to an assembly sequence of anode casing-stainless steel gasket-lithium metal plate-separator-electrolyte-cathode plate-cathode casing in an inert atmosphere glove box.

### 3. Related performance tests

### 1. Relevant tests of cathode lithium-supplementing additive

### 1.1 Electron microscope analysis (SEM) of cathode lithium-supplementing additives:

Scanning electron microscope analysis was performed on the cathode lithium-supplementing additives provided in the above Examples 1-3 and the comparative examples. The scanning electron microscope photo of the cathode lithium-supplementing additives provided in Example 1 was shown in FIG. 6. The SEM photos of the cathode lithium-supplementing additives provided in other examples were similar to those shown in FIG. 6. It can be seen from the SEM photo that the particles of the cathode lithium-supplementing additive prepared in the examples of the present application are relatively uniform in the particle size distribution, the surface is compact, and the shape and particle size of the cathode lithium-supplementing additive prepared are stable. In addition, the resistivity of the cathode lithium-supplementing additive prepared in Example 1 is less than 5Ω·cm, while the resistivity of the cathode lithium-supplementing additive in comparative example 1 is greater than 200Ω·cm.

### 1.2 X-ray diffraction (XRD) characterization of cathode lithium-supplementing additives:

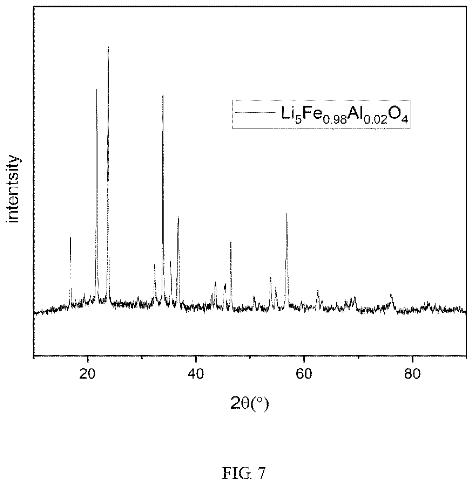

XRD analysis was performed on the cathode lithium-supplementing additives provided in the above Examples 1-3 and the comparative examples. The XRD pattern of the cathode lithium-supplementing additive of Example 1 is shown in FIG. 7. It can be seen from FIG. 7 that there is a small peak at 2θ of 19.8°. This peak is the peak of aluminum-doped Li₅AlO₄, the small peak at 28.4° is the LiAlO₂ peak, and the small peak at 43.4° is Al₂O₃ characteristic peaks. It can be determined that there are at least three forms of aluminum. The XRD patterns of the cathode lithium-supplementing additives provided in other examples are similar to those shown in FIG. 7, and all have characteristic peaks of Li₅AlO₄, LiAlO₂, and Al₂O₃.

### 1.3 Transmission electron microscopy (TEM) characterization of cathode lithium-supplementing additives:

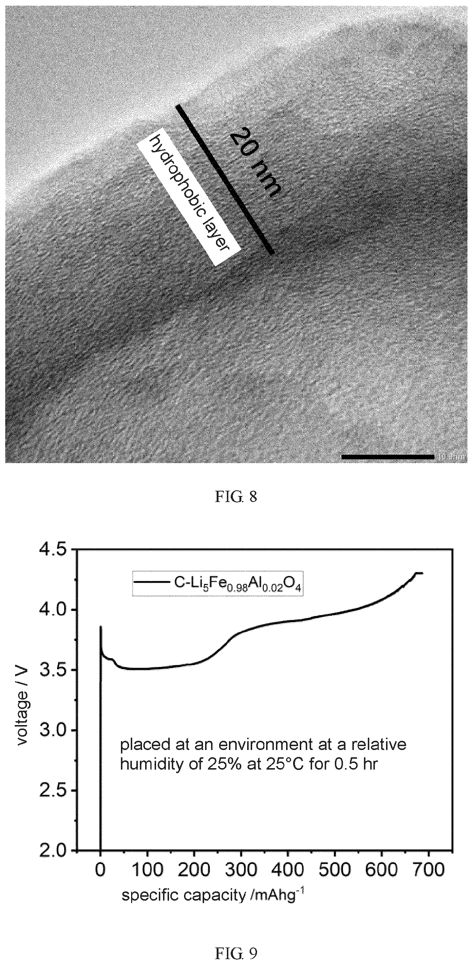

The cathode lithium-supplementing additives provided in the above Examples 1-3 and the comparative example were respectively subjected to TEM analysis. The TEM image of the cathode lithium-supplementing additive in Example 1 is shown in FIG. 8. It can be seen from FIG. 8 that the cathode lithium-supplementing additive in Example 1 has a characteristic peak of aluminum, and the TEM photos of the cathode lithium-supplementing additive provided in other examples are similar to those shown in FIG. 8. It can be seen from the TEM image that the material is covered by a continuous dense inorganic layer. This continuously dense inorganic layer can effectively isolate the core material from contact with water and carbon dioxide in the air, reduce the overall residual alkali content of the material, and improve the processability of the cathode slurry. When the material is prepared into a battery, the core material can be effectively separated from the electrolyte to reduce side reactions.

### 2. Examples of Lithium-ion battery:

The electrochemical performance of each lithium-ion battery assembled in the above examples of lithium-ion battery was tested, and the test conditions were as follows:

the lithium-ion battery was charged to 4.3V at 0.05 C, and kept at the constant voltage of 4.3 V until the current was less than 0.01C; an initial charge specific capacity was tested, and the test instrument was the model LANHE-CT3001A battery test cabinet produced by Wuhan Landian Electronics Co., Ltd.

The results of the initial charge specific capacity test are as follows:
The prepared cathode plates containing the cathode lithium-supplementing additives of the above examples were stored and assembled into batteries under the same conditions, the charging specific capacity at 4.3 V can reach more than 650 mAh/g, in which, the battery containing the cathode lithium-supplementing additive provided in Example 1 had an initial charge specific capacity curve as shown in FIG. 9. The initial charge specific capacity of the cathode lithium additive battery provided in other examples was close to that of the cathode lithium additive battery provided in Example 1. However, the highest value of the initial charge specific capacity of the battery containing the cathode lithium-supplementing additive battery provided in comparative example 1 was significantly lower than 650 mAh/g. Therefore, due to the presence of the inorganic aluminum compound in the dense packaging layer of the cathode lithium-supplementing additive in the examples of the present application, the compact performance of the dense packaging layer was significantly improved, the isolation between the core and the environment was improved, and the residual alkali content was reduced, thus the cathode lithium-supplementing additive of the examples of the present application has high lithium-supplementing performance and processing stability, which significantly improves the electrochemical performance of the battery.

In the battery assembled after the cathode plate containing the cathode lithium-supplementing additive provided by Example 1 was stored at different times and at different humidities, the initial charge specific capacity of each battery at an ambient humidity of 25% was shown in Table 2 below. The initial charge specific capacity of each battery at the ambient humidity of 20% was shown in Table 3 below, and the initial charge specific capacity of each battery at the ambient humidity of 10% was shown in Table 4 below. The specific capacities for the initial charge in the batteries assembled after the cathode plates containing the cathode lithium-supplementing additives provided in Comparative Example 1 and Comparative Example 2 were stored for 0.5 h were shown in Table 2 below.

It can be seen from Table 2 that the cathode plate (after drying) prepared by the cathode lithium-supplementing additive in Example 1 of the present application can still maintain a high capacity after being placed under the condition of humidity not higher than 25% (at 25°C) for 2 hrs. However, referring to the cathode plate containing the cathode lithium-supplementing additive in Comparative Example 1, the cathode plate containing the cathode lithium-supplementing additive in Example 1 showed a sharp decline in capacity after being placed for 0.5 hr, for example, the specific capacity of the battery containing the cathode lithium-supplementing additive in Comparative Example 1, and the specific capacity of the battery containing the cathode lithium-supplementing additive of Comparative Example 2 was 477.2 mAh/g.

Comparing Table 2 to Table 4, it can be seen that although the specific capacity of the cathode plate prepared by the cathode lithium-supplementing additive in Example 1 of the present application is changed under different humidity, the difference is almost the same. According to the test of Examples 2-3, it was found that the specific capacity of the cathode plate containing the cathode lithium-supplementing additive of Examples 2-3 did not change significantly when stored at different humidity. This showed that when the cathode lithium-supplementing additive of the examples of the present application was stored at humidity of less than 25%, the capacity of the cathode would not attenuate too much; when being stored at the environment humidity of less than 20%, the capacity of the cathode lithium-supplementing additive of the example of the present application basically did not attenuated or had little attenuation, thus having excellent storage performance and stable electrochemical performance. It was tested that when the cathode lithium-supplementing additive provided in Example 1 was placed in the air with water and oxygen for a sufficient time, the structure changed, and LiFeO₂, LiOH, Li₂CO₃ products were generated.

**Table 2**

| Examples | Different storage times at a humidity of 25% | Specific capacity mAh/g |
|---|---|---|
| Example 1 | 0.5 hrs | 686.2 |
| | 1 hr | 662.3 |
| | 2 hrs | 657.2 |
| | 5 hrs | 634.1 |
| | 10 hrs | 606.2 |
| | 20 hrs | 591.6 |
| Comparative example 1 | 0.5 hr | 235 |
| Comparative example 2 | 0.5 hr | 477.2 |

**Table 3**

| Examples | Different storage times at a humidity of 20% | Specific capacity mAh/g |
|---|---|---|
| Example 1 | 0.5 hr | 688.6 |
| | 1 hr | 680.3 |
| | 2 hrs | 674.2 |
| | 5 hrs | 653.4 |
| | 10 hrs | 642.1 |
| | 20 hrs | 638.5 |

**Table 4**

| Examples | Different storage times at a humidity of 10% | Specific capacity mAh/g |
|---|---|---|
| Example 1 | 0.5 hr | 689.1 |
| | 1 hr | 685.9 |
| | 2 hrs | 682.7 |
| | 5 hrs | 680.3 |
| | 10 hrs | 677.8 |
| | 20 hrs | 672.6 |

The above are only optional embodiments of the application, and are not intended to limit the application. For those skilled in the art, various modifications and changes may be made to the present application. Any modifications, equivalent replacements, improvements, etc. made within the spirit and principles of the present application shall be included within the scope of the claims of the present application.

## Claims

1. A cathode lithium-supplementing additive, comprising a core and a dense packaging layer coated on the core, wherein the core comprises a lithium-rich lithium-supplementing material, and a material of the dense packaging layer comprises an inorganic aluminum compound.

2. The cathode lithium-supplementing additive according to claim 1, wherein
the inorganic aluminum compound is distributed on an inner surface of the dense packaging layer adjacent to the core;
or alternatively, a content of the inorganic aluminum compound decreases gradually in a direction from the inner surface of the dense packaging layer adjacent to the core to an outer surface of the dense packaging layer.

3. The cathode lithium-supplementing additive according to claim 1, wherein
the inorganic aluminum compound comprises an inorganic aluminum compound generated by heat treatment; and/or,
the inorganic aluminum compound comprises at least one of Al₂O₃, LiAlO₂, and Li₅AlO₄.

4. The cathode lithium-supplementing additive according to claim 3, wherein
the inorganic aluminum compound comprises: Li₅AlO₄, LiAlO₂, and Al₂O₃, and Li₅AlO₄, LiAlO₂, and Al₂O₃ form a Li₅AlO₄ coating layer, a LiAlO₂ coating layer, and an Al₂O₃ coating layer, respectively;
in a direction from an inside of the core to a surface of the core, the Li₅AlO₄ coating layer, the LiAlO₂ coating layer, and the Al₂O₃ coating layer are sequentially coated to form an aluminum-containing transitional coating layer; and
the Li₅AlO₄ coating layer is coated on the surface of the core.

5. The cathode lithium-supplementing additive according to any one of claims 1-4, wherein
the lithium-rich lithium-supplementing material is a lithium-supplementing material having an inverse fluorite structure; and/or
the lithium-rich lithium-supplementing material has a molecular formula of LₓM_{y}N_{z}O_{q}, in which, L represents Li or/and a mixed alkali metal element of Li and no more than 30% of at least one of K and Na; M comprises at least one of Fe, Co, Mn, Ni, Si, and Al; N comprises at least one of Fe, Co, Mn, Ni, Si, Al, and other metal elements having equivalent or different valence states; O is oxygen, x ranges from 4 to 6, y ranges from 0.7 to 1.0, z ranges from 0.01 to 0.3, and q ranges from 4 to 5.

6. The cathode lithium-supplementing additive according to claim 5, wherein in the molecular formula, a molar ratio of L to a sum of M and N is (4 to 7): 1; and/or
while M in the molecular formula is Fe, N is Al.

7. The cathode lithium-supplementing additive according to any one of claims 1-4, wherein
the dense packaging layer comprises an ion conductor packaging layer,
the ion conductor packaging layer is coated on the surface of the core, and the material of the ion conductor packaging layer comprises the inorganic aluminum compound; and/or
a mass content of the inorganic aluminum compound in the dense packaging layer is 0.1% to 5.0%; and/or,
a particle size of the core is 0.2 µm to 20 µm.

8. The cathode lithium-supplementing additive according to claim 7, wherein
the ion conductor packaging layer comprises a first ion conductor packaging layer and a second ion conductor packaging layer; the first ion conductor packaging layer is coated on the surface of the core, and a material of the first ion conductor packaging layer is the inorganic aluminum compound; and
the second ion conductor packaging layer is coated on a surface of the first ion conductor packaging layer away from the core.

9. The cathode lithium-supplementing additive according to claim 7, wherein the dense packaging layer further comprises an electron conductor packaging layer, and the electron conductor packaging layer is coated on a surface of the ion conductor packaging layer away from the core.

10. The cathode lithium-supplementing additive according to claim 9, wherein a material of the electron conductor packaging layer comprises at least one of a carbon material, a conductive oxide, and a conductive organic substance; and/or
a thickness of the electron conductor packaging layer is 50 nm to 200 nm; and/or
the material of the electron conductor packaging layer is the carbon material, and a content of the carbon material accounts for 2 wt. % to 10 wt. % of the cathode lithium-supplementing additive.

11. The cathode lithium-supplementing additive according to claim 1, wherein a specific surface area of the cathode lithium-supplementing additive is 0.2 m²/g to 5.0 m²/g; and/or
a bulk density of the cathode lithium-supplementing additive is 0.35 g/mL to 0.80 g/mL, and a tap density of the cathode lithium-supplementing additive is 0.50 g/mL to 1.20 g/mL.

12. The cathode lithium-supplementing additive according to claim 1, wherein a resistivity of the cathode lithium-supplementing additive is less than 5 Ω cm at 25°C; and/or
a material of the electron conductor packaging layer comprises at least one of a carbon material, a conductive oxide, and a conductive organic substance.

13. The cathode lithium-supplementing additive according to claim 1, wherein
a capacity of the cathode plate prepared by the cathode lithium-supplementing additive, the binder and the conductive agent stored for 20 hrs at an ambient humidity of 25% has a decay rate of no more than 30% relative to a capacity stored for 0.5 hrs.

14. The cathode lithium-supplementing additive according to claim 1, wherein
a capacity of the cathode plate prepared by the cathode lithium-supplementing additive, the binder and the conductive agent stored for 20 hrs at an ambient humidity of 10% has a decay rate of no more than 20% relative to a capacity stored for 0.5 hrs.

15. A preparation method for a cathode lithium-supplementing additive, comprising the following steps of:
forming a coating film layer on a surface of a lithium-rich lithium-supplementing material with a material containing an aluminum source, subjecting a resulting mixture to a first heat treatment in an oxygen-containing environment to form a dense packaging layer on a surface of the lithium-rich lithium-supplementing material;
or alternatively,
subjecting the lithium-rich lithium-supplementing material to a second heat treatment in an aluminum-containing container and in the oxygen-containing environment, to form the dense packaging layer on the surface of the lithium-rich lithium-supplementing material.

16. The preparation method according to claim 15, wherein the method of forming the coating film layer on the surface of a lithium-rich lithium-supplementing material with the material containing the aluminum source comprises the following steps:
preparing a solution from the aluminum source, dispersing the lithium-rich lithium-supplementing material in the solution, and triggering an aluminum precipitation reaction to deposit an aluminum compound on the surface of the lithium-rich lithium-supplementing material, whereby forming a coating film layer containing the aluminum compound.

17. The preparation method according to claim 15 or 16, wherein the aluminum source comprises at least one of aluminum isopropoxide, an aluminum salt of an organic acid radical, aluminum oxide, aluminum nitrate, aluminum chloride, aluminum sulfate, and aluminum silicate; and/or
the first heat treatment is performed at a temperature of 700°C to 1000°C for a duration of 20 hrs to 48 hrs; and/or
the second heat treatment is performed at a temperature of 500°C to 1000°C for a duration of 20 hrs to 48 hrs.

18. A cathode material, comprising a cathode active material and the cathode lithium-supplementing additive according to any one of claims 1-14 or the cathode lithium-supplementing additive prepared by the preparation method according to any one of claims 15-17.

19. A cathode plate, comprising a cathode current collector and a cathode active layer bonded to a surface of the cathode current collector, wherein the cathode active layer contains the cathode lithium-supplementing additive according to any one of claims 1-14 or the cathode lithium-supplementing additive prepared by the preparation method according to any one of claims 15-17.

20. A secondary battery, comprising a cathode plate and an anode plate, wherein the cathode plate is the cathode plate according to claim 19.
